# EUROPEAN PATENT APPLICATION

(11) **EP 3 855 151 A1**
(43) Date of publication of application: **28.07.2021**
(21) Application number: 19863651.6
(22) Date of filing: 17.09.2019
(51) Int. Cl.: G01M 3/24

(54) **FLUID LEAKAGE DIAGNOSIS DEVICE, FLUID LEAKAGE DIAGNOSIS SYSTEM, FLUID LEAKAGE DIAGNOSIS METHOD, AND RECORDING MEDIUM STORING FLUID LEAKAGE DIAGNOSIS PROGRAM**

(30) Priority: 19.09.2018 JP 2018175419
(71) Applicant: NEC Corporation, 108-8001 Tokyo (JP)
(72) Inventor: MATAGA Junichiro, Tokyo 108-8001 (JP); SHINODA Shigeki, Tokyo 108-8001 (JP); KIKUCHI Katsumi, Tokyo 108-8001 (JP)
(74) Representative: Betten & Resch
(86) International application number: PCT/JP2019/036334
(87) International publication number: WO 2020/059693

(57) **Abstract**

A fluid leakage diagnosis device 40 includes: an identification unit 41 for using wave measurement information 500 expressing a wave measured in a pipe 50 to identify a position of an origin 51 of the wave; a detection unit 42 for using structural information 501 of the pipe 50 to detect a structural factor 52 of the wave at the position of the origin 51 identified by the identification unit 41; a determination unit 43 for determining whether a time shift in the wave measurement information 500 satisfies a condition; and a diagnosis unit 44 for diagnosing fluid leakage in the pipe 50 based on a detection result from the detection unit 42 and a determination result from the determination unit 43. As a result, this fluid leakage diagnosis device enhances the accuracy of fluid leakage diagnosis for a pipe accomplished through measurement of a wave produced in the pipe.

## Description

### [Technical Field]

The present invention relates to a technique for diagnosing fluid leakage in a pipe based on a wave propagating through the pipe.

### [Background Art]

In modern society, it is important to locate failures and abnormalities accompanied by aging of social infrastructure equipment at an early stage, and to take countermeasures (such as repair) against the located failures and abnormalities at an early stage. In order to locating failures and abnormalities in the infrastructure equipment at an early stage, for example, continuous monitoring of the target equipment by a sensor and planned investigation are effective. In the infrastructure equipment, since monitoring and investigation from the ground are difficult especially for pipes buried underground for gas, water, and the like, monitoring and investigation of buried portions are performed by installing sensors in directly accessible valve plugs (for example, a hydrant or an air valve in a water supply) or the like. As an example of a method of investigating fluid leakage in the pipe, there is a method of inserting an in-pipe camera into the pipe. Alternatively, there is, for example, a method using a correlation method to detect the presence or absence of leakage and a leakage position based on the similarity between signals obtained by sensors installed in valve plugs or the like to measure vibration or water pressure, where the signals express a wave (vibration or a pressure wave) propagating through an investigation target section embracing a place where the occurrence of a fluid leakage is suspected.

As a technique related to such a method, PTL 1 discloses a leakage finding device with improved accuracy of finding leakage from a tube even in an environment where noise is produced. This device uses signals expressing the detection results of a plurality of sensors to calculate the value of a cross-correlation function between these signals, and determines that there is leakage when the calculated value is equal to or more than a first threshold value and the temporal shift of the calculated value between different measurement times is equal to or less than a second threshold value. This device then calculates a propagation time difference between leakage sounds based on points where the value of the cross-correlation function is equal to or more than the first threshold value and the temporal shift of the value of the cross-correlation function between different measurement times is equal to or less than the second threshold value, and identifies the leakage position based on the calculated propagation time difference.

PTL 2 discloses a device that detects a water leakage position in a water pipe or the like buried underground. This device includes vibration detection devices installed at the positions of two ends of an inspection section of a pipe. This device extracts a pipe vibration signal having a frequency component common to the underwater sound as a common frequency component signal, with respect to each of the two ends of the inspection section of the pipe. This device conducts a cross-correlation process on the common frequency component signal of each end, and finds water leakage in the pipe based on the result of the cross-correlation process. Then, this device works out a difference in propagation time between the common frequency component signals of the two ends, and detects a water leakage position in the pipe based on the worked-out difference in propagation time.

PTL 3 discloses a method of determining an abnormality in a pipeline based on a calculated determination value. In this method, vibration data is obtained by measuring vibration in the pipeline for a prescribed time at least at one inspection position, and the device extracts some waveform patterns from the vibration data. Then, in this method, a cross-correlation function between the extracted waveform patterns and the vibration data is obtained, and the determination value is calculated based on the amplitude of the obtained cross-correlation function.

### [Citation List]

### [Patent Literature]

[PTL 1] WO 2015/146082 A
[PTL 2] JP 2008-051776 A
[PTL 3] JP 2017-083292 A

### [Summary of Invention]

### [Technical Problem]

In a general fluid leakage detection system or the like using the correlation method described above, all waves (vibration or pressure waves) that reach two sensors (detectors) installed at two ends of the investigation target section in common are detected. That is, these sensors detect, for example, a wave caused by an external environment or a wave produced by a pipe (pipeline) structure in addition to a wave produced by fluid leakage. In particular, since the wave produced due to the pipe structure is produced exactly from the pipe as in the case of the fluid leakage, it is difficult to distinguish such a wave from the wave produced due to fluid leakage.

As described above, since a false positive (which means to erroneously diagnose that a fluid leakage has occurred even though no actual fluid leakage has occurred) occurs in general detection of fluid leakage, there is a disadvantage that the diagnostic accuracy for fluid leakage is lowered. PTLs 1 to 3 do not specifically mention such a disadvantage. It is a principal object of the present invention to provide a fluid leakage diagnosis device and the like that solve this disadvantage.

### [Solution to Problem]

A fluid leakage diagnosis device according to an aspect of the present invention includes: identification means for using wave measurement information expressing a wave measured in a pipe to identify a position of an origin of the wave; detection means for using structural information of the pipe to detect a structural factor causing the wave at the position of the origin identified by the identification means; determination means for determining whether a time shift of the wave measurement information satisfies a condition; and diagnosis means for diagnosing fluid leakage in the pipe based on a detection result by the detection means and a determination result by the determination means.

From another standpoint to achieve the above-mentioned object, a fluid leakage diagnosis method according to an aspect of the present invention is implemented by an information processing device and includes: using wave measurement information expressing a wave measured in a pipe to identify a position of an origin of the wave; using structural information of the pipe to detect a structural factor causing the wave at the position of the origin that has been identified; determining whether a time shift of the wave measurement information satisfies a condition; and diagnosing fluid leakage in the pipe based on a detection result relating to the structural factor and a determination result relating to the time shift.

From still another standpoint to achieve the above-mentioned object, a fluid leakage diagnosis program according to an aspect of the present invention causes a computer to execute: an identification process of using wave measurement information expressing a wave measured in a pipe to identify a position of an origin of the wave; a detection process of using structural information of the pipe to detect a structural factor causing the wave at the position of the origin identified by the identification process; a determination process of determining whether a time shift of the wave measurement information satisfies a condition; and a diagnosis process of diagnosing fluid leakage in the pipe based on a detection result by the detection process and a determination result by the determination process.

The present invention can also be implemented by a computer-readable nonvolatile recording medium storing the fluid leakage diagnosis program (computer program).

### [Advantageous Effects of Invention]

The present invention makes it possible to enhance the accuracy of fluid leakage diagnosis for a pipe accomplished through measurement of a wave produced in the pipe.

### [Brief Description of Drawings]

Fig. 1 is a block diagram illustrating a configuration of a fluid leakage diagnosis system 1 according to a first example embodiment of the present invention.
Fig. 2 is a diagram illustrating an example in which an identification unit 11 according to the first example embodiment of the present invention calculates the value of a cross-correlation function 110 based on wave observation information 150.
Fig. 3 is a diagram exemplifying structural information 151 according to the first example embodiment of the present invention.
Fig. 4 is a diagram exemplifying a time shift of the amplitude of a wave indicated by the wave measurement information 150 according to the first example embodiment of the present invention.
Fig. 5 is a diagram exemplifying the contents of fluid leakage diagnosis performed on a pipe 30 by a diagnosis unit 14 according to the first example embodiment of the present invention.
Fig. 6 is a flowchart illustrating an operation of a fluid leakage diagnosis device 10 according to the first example embodiment of the present invention.
Fig. 7 is a block diagram illustrating a configuration of a fluid leakage diagnosis device 40 according to a second example embodiment of the present invention.
Fig. 8 is a block diagram illustrating a configuration of an information processing device 900 capable of executing the fluid leakage diagnosis device according to each example embodiment of the present invention.

### [Example Embodiment]

Hereinafter, example embodiments of the present invention will be described in detail with reference to the drawings.

### <First Example Embodiment

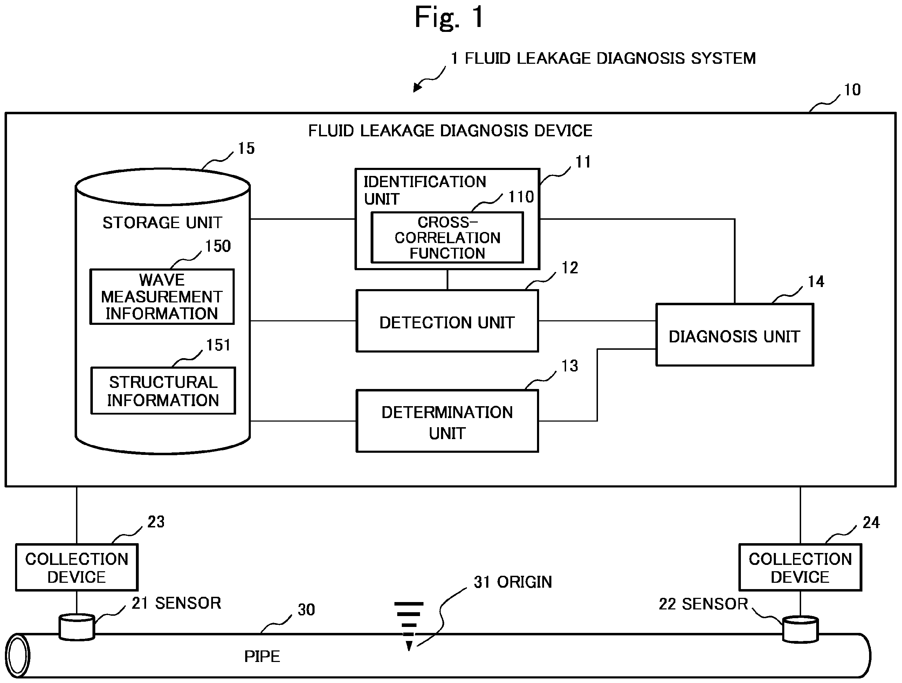

Fig. 1 is a block diagram illustrating a configuration of a fluid leakage diagnosis system 1 according to a first example embodiment of the present invention. The fluid leakage diagnosis system 1 is a system that diagnoses fluid leakage relating to a pipe (pipeline) 30 based on a wave (such as vibration or a pressure wave) propagating through the pipe 30. Note that the pipe 30 is a piece of social infrastructure equipment such as a water pipe or a gas pipe.

The fluid leakage diagnosis system 1 according to the present example embodiment roughly includes a fluid leakage diagnosis device 10, sensors 21 and 22, and collection devices 23 and 24.

The sensors 21 and 22 are devices capable of measuring a wave propagating through the pipe 30, and are, for example, vibration sensors or pressure sensors. For example, when the sensors 21 and 22 are vibration sensors, sensors using a piezoelectric technology or sensors using a capacitive technology may be employed. When the sensors 21 and 22 are pressure sensors, for example, it is desirable that sensors capable of measuring a pressure wave at a high frequency up to about 10 kilohertz (kHz) be employed. Places where the sensors 21 and 22 are installed only need to be places directly connected to the pipe 30, such as a fire hydrant, an air valve, or a valve plug in a manhole of a water pipe, for example.

For example, during a periodic inspection of the pipe 30 (at a prescribed time), measurement data from the sensor 21 is collected by the collection device 23 and measurement data from the sensor 22 is collected by the collection device 24. The sensor 21 and the collection device 23, and the sensor 22 and the collection device 24 separately constitute measuring devices. The collection devices 23 and 24 operate synchronously with each other by sharing time information. The collection devices 23 and 24 may receive a time signal from a global navigation satellite system (GNSS), for example, or may have a highly accurate timing function (internal clock) in order to operate synchronously with each other.

The collection devices 23 and 24 collect measurement data from the sensors 21 and 22 in time series at a prescribed sampling frequency (for example, frequencies up to about 5 kHz are desirable). The collection device 23 (24) generates wave measurement information 150 based on the measurement data expressing a wave propagating through the pipe 30, which has been collected from the sensor 21 (22) in time series. The wave measurement information 150 expresses the physical characteristic values of the wave propagating through the pipe 30 associated with the time of measurement by the sensors 21 and 22. For example, the physical characteristic value may be the amplitude of the wave, the frequency spectrum of the wave, or the like.

The collection devices 23 and 24 transmit the generated wave measurement information 150 to the fluid leakage diagnosis device 10 by wire or wirelessly.

The fluid leakage diagnosis device 10 includes an identification unit 11, a detection unit 12, a determination unit 13, a diagnosis unit 14, and a storage unit 15. The storage unit 15 is, for example, a storage device such as a magnetic disk or an electronic memory, and stores the wave measurement information 150 received by the fluid leakage diagnosis device 10 from the collection devices 23 and 24.

Based on the wave measurement information 150 stored in the storage unit 15, the identification unit 11 uses a cross-correlation function 110 to identify the position of an origin 31 of the wave in the pipe 30.

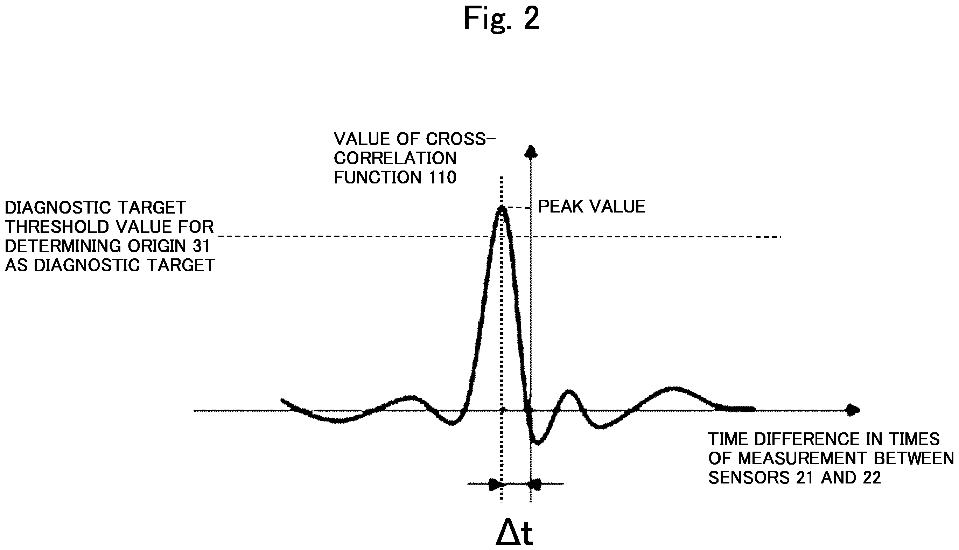

Fig. 2 is a diagram (graph) illustrating an example in which the identification unit 11 according to the present example embodiment calculates the value of the cross-correlation function 110 based on the wave measurement information 150. In the graph illustrated in Fig. 2, the horizontal axis expresses the time difference between the time of measurement of the sensor 21 and the time of measurement of the sensor 22. In the graph illustrated in Fig. 2, the vertical axis expresses the value of the cross-correlation function 110 calculated with respect to the time difference. Since the cross-correlation function 110 is well known as indicated by, for example, PTLs 1 to 3, a detailed description thereof will be omitted in the present application.

The identification unit 11 may use, as the vertical axis of the graph exemplified in Fig. 2, a value obtained by working out the ratio of the peak value of the cross-correlation function 110 to the dark noise outside the measurement range, instead of using the whole value of the cross-correlation function 110. Alternatively, the identification unit 11 may use a normalized value as the peak value of the cross-correlation function 110.

The value of the cross-correlation function 110 expresses the height of the correlation (similarity) between two waves measured at the sensors 21 and 22. Therefore, a time difference Δt when the value of the cross-correlation function 110 coincides with the peak expresses the time difference between the time when a wave produced at the origin 31 arrives at the sensor 21 and the time when the wave arrives at the sensor 22.

The identification unit 11 identifies the position of the origin 31 based on the positional relationship (distance) between the sensors 21 and 22, Δt, and a speed (for example, sound speed) at which the wave propagates through the pipe 30. The identification unit 11 can use a theoretical value calculated based on, for example, the physical characteristics of the pipe 30 (such as a material type and the diameter) as the speed (propagation speed) at which the wave propagates through the pipe 30. Alternatively, the identification unit 11 may use, as the propagation speed, a measured value of the propagation speed worked out by measuring vibration produced by causing vibration at a certain place A in the pipe 30, at another place B in the pipe 30. The identification unit 11 may use, as the distance between the sensors 21 and 22, a distance indicated in the drawing of the pipe 30, or may use the measured value of the distance.

The identification unit 11 notifies the detection unit 12 of the position of the origin 31 identified by the above-described operation. The identification unit 11 also notifies the diagnosis unit 14 of the peak value of the cross-correlation function 110.

The detection unit 12 illustrated in Fig. 1 detects, based on structural information 151 of the pipe 30, a structural factor of causing the wave that lies in the position of the origin 31 identified by the identification unit 11.

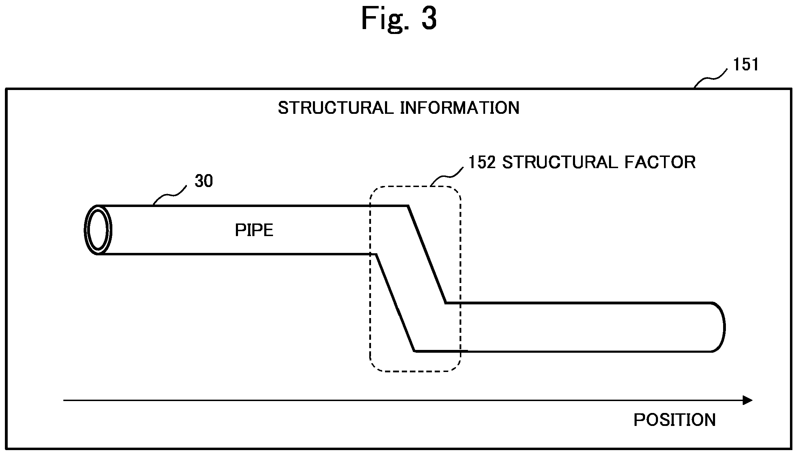

Fig. 3 is a diagram exemplifying the structural information 151 according to the present example embodiment. The structural information 151 is information expressing the structure and position of the pipe 30 in association with each other. That is, the structural information 151 expresses a structural factor 152 of causing the wave in the pipe 30 in association with the position.

For example, a structure (part) that causes a shift in the fluid flow (for example, the water flow) in the pipe 30 can be regarded as the structural factor 152. Fig. 3 expresses a bend and a joint of the pipe 30 as an example of the structural factor 152. Alternatively, the structural factor 152 may be, for example, a man-hole for check work provided at any place of the pipe 30.

In Fig. 3, the structural information 151 is expressed using the external appearance of the pipe 30 for convenience of explanation, but actually, it is assumed that the structural information 151 is information using a code expressing the contents of the structure of the pipe 30. It is also assumed that the structural information 151 is stored in advance in the storage unit 15 by, for example, an administrator or the like of the fluid leakage diagnosis device 10.

The detection unit 12 notifies the diagnosis unit 14 of the detection result relating to the structural factor 152 of causing the wave.

The determination unit 13 illustrated in Fig. 1 refers to the wave measurement information 150 stored in the storage unit 15, and determines whether a time shift of the wave measurement information 150 satisfies a condition.

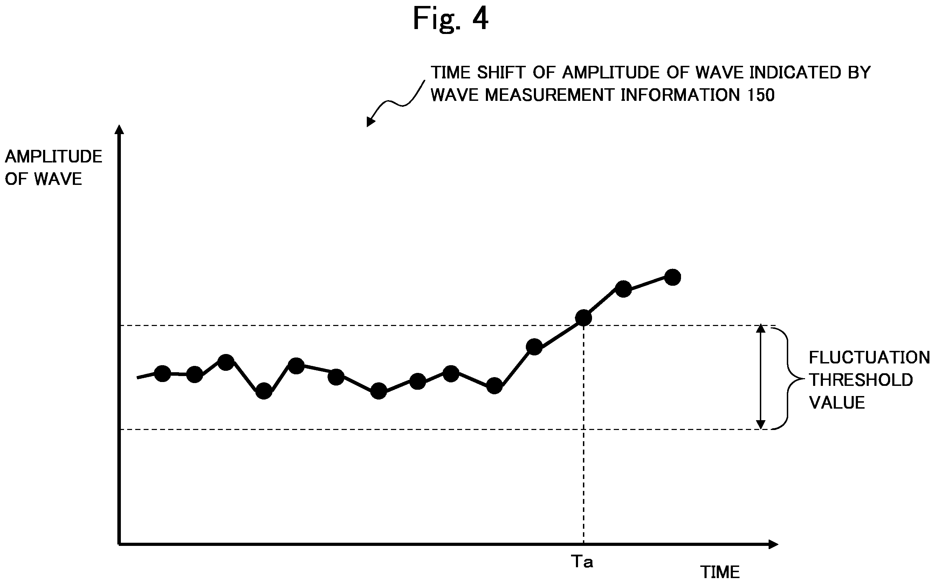

Fig. 4 is a diagram (graph) exemplifying the time shift of the amplitude of the wave indicated by the wave measurement information 150 according to the present example embodiment. The wave measurement information 150 may express the time shift of a physical characteristic value relating to the wave other than the amplitude, and for example, may express a time shift of the frequency spectrum of the wave.

As a condition relating to the time shift of the wave measurement information 150, the determination unit 13 adopts, for example, a condition that the fluctuation amount of the amplitude of the wave is equal to or more than a fluctuation threshold value (first threshold value). The fluctuation threshold value is then assumed as a value greater than the maximum value of the fluctuation amount of the amplitude of the wave measured in a prescribed period with respect to the pipe 30 that has been confirmed in advance to be in a state in which no fluid leakage has occurred. In this case, it is desirable that the prescribed period be, for example, a period in which one round of the life pattern of a person is completed (for example, one week). That is, the fluctuation threshold value is a value greater than the fluctuation value at which the amplitude of the wave fluctuates due to the life pattern of a person.

In the example illustrated in Fig. 4, the fluctuation amount of the amplitude of the wave falls within the fluctuation threshold value until time Ta, but is equal to or more than the fluctuation threshold value at the time Ta. Therefore, the determination unit 13 determines that the time shift of the wave measurement information 150 satisfies the condition (that is, the fluctuation amount of the amplitude of the wave is equal to or more than the fluctuation threshold value), and notifies the diagnosis unit 14 of this determination result.

The diagnosis unit 14 illustrated in Fig. 1 diagnoses fluid leakage in the pipe 30 based on the peak value of the cross-correlation function 110 notified from the identification unit 11, the detection result notified from the detection unit 12, and the determination result notified from the determination unit 13.

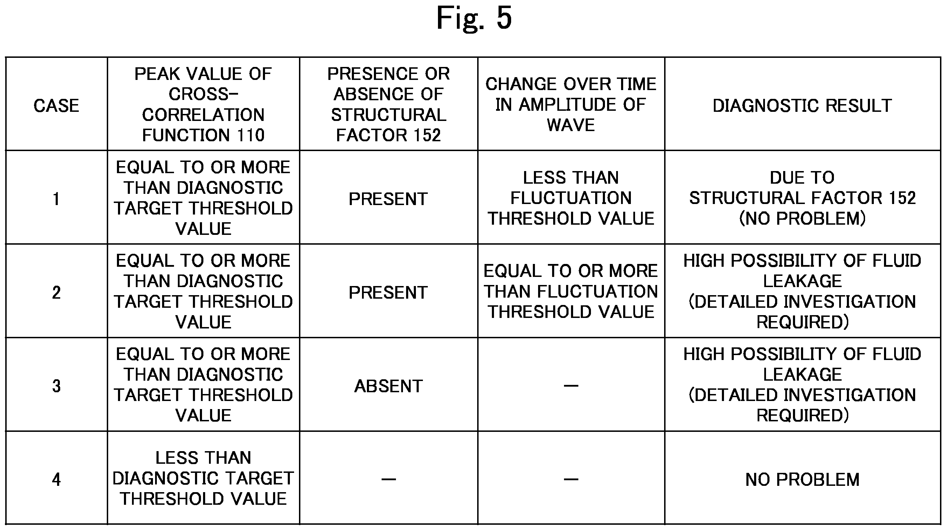

Fig. 5 is a diagram exemplifying the contents of fluid leakage diagnosis performed on the pipe 30 by the diagnosis unit 14 according to the present example embodiment.

The diagnosis unit 14 confirms whether or not the peak value of the cross-correlation function 110 exemplified in Fig. 2, which has been notified from the identification unit 11, is equal to or more than a diagnostic target threshold value (second threshold value) for determining the origin 31 as a diagnostic target. When the peak value of the cross-correlation function 110 is less than the diagnostic target threshold value (case 4 in Fig. 5), the diagnosis unit 14 diagnoses that there is no problem with the pipe 30, regardless of the detection result notified from the detection unit 12 and the determination result notified from the determination unit 13. That is, when the peak value of the cross-correlation function 110 is equal to or more than the diagnostic target threshold value (cases 1 to 3 in Fig. 5), the diagnosis unit 14 performs a diagnosis relating to the origin 31.

When the detection result notified from the detection unit 12 indicates that there is no structural factor 152 of causing the wave (case 3 in Fig. 5), the diagnosis unit 14 diagnoses that there is a high possibility that fluid leakage has occurred at the origin 31, regardless of the determination result notified from the determination unit 13.

The diagnosis unit 14 diagnoses that there is a high possibility that fluid leakage has occurred at the origin 31 when the detection result notified from the detection unit 12 indicates the presence of the structural factor 152 of causing the wave and the determination result notified from the determination unit 13 indicates that the time shift of the amplitude of the wave is equal to or more than the fluctuation threshold value (case 2 in Fig. 5).

The diagnosis unit 14 diagnoses that there is no problem with the pipe 30 when the detection result notified from the detection unit 12 indicates the presence of the structural factor 152 of causing the wave and the determination result notified from the determination unit 13 indicates that the time shift of the amplitude of the wave is less than the fluctuation threshold value (case 1 in Fig. 5) because the wave produced at the origin 31 is caused by the structural factor 152.

The diagnosis unit 14 displays the diagnostic result described above on, for example, a management terminal device (not illustrated) operated by a user of the fluid leakage diagnosis device 10 to present the diagnostic result to the user. When the diagnostic result indicates that there is a high possibility that fluid leakage has occurred (cases 2 and 3 in Fig. 5), the user performs a detailed investigation of the origin 31.

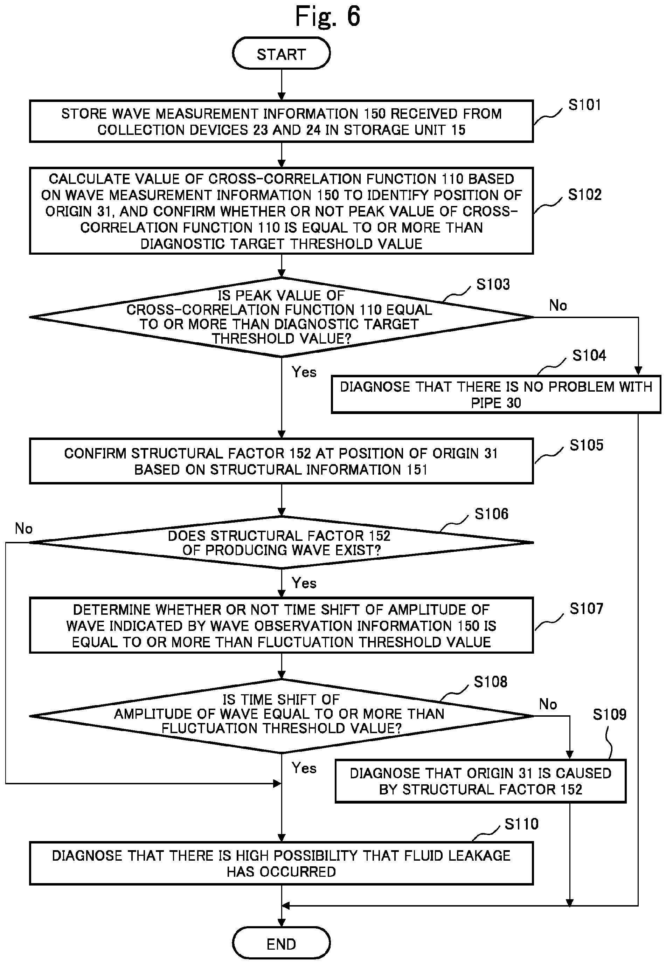

Next, the operation (process) of the fluid leakage diagnosis device 10 according to the present example embodiment will be described in detail with reference to the flowchart in Fig. 6.

The fluid leakage diagnosis device 10 stores the wave measurement information 150 received from the collection devices 23 and 24 in the storage unit 15 (step S101). The identification unit 11 calculates the value of the cross-correlation function 110 based on the wave measurement information 150 to identify the position of the origin 31. The diagnosis unit 14 confirms whether or not the peak value of the cross-correlation function 110 calculated by the identification unit 11 is equal to or more than the diagnostic target threshold value (step S102).

When the peak value of the cross-correlation function 110 is less than the diagnostic target threshold value (No in step S103), the diagnosis unit 14 diagnoses that there is no problem with the pipe 30 (step S104), and the entire process ends. When the peak value of the cross-correlation function 110 is equal to or more than the diagnostic target threshold value (Yes in step S103), the detection unit 12 confirms the structural factor 152 of causing the wave at the position of the origin 31, based on the structural information 151 (step S105).

When the structural factor 152 of causing the wave does not exist (No in step S106), the diagnosis unit 14 diagnoses that there is a high possibility that fluid leakage has occurred in the pipe 30 (step S110), and the entire process ends. When the structural factor 152 of producing the wave exists (Yes in step S106), the determination unit 13 determines whether the time shift of the amplitude of the wave indicated by the wave observation information 150 is equal to or more than the fluctuation threshold value (step S107).

When the time shift of the amplitude of the wave is equal to or more than the fluctuation threshold value (Yes in step S108), the diagnosis unit 14 diagnoses that there is a high possibility that fluid leakage has occurred in the pipe 30 (step S110), and the entire process ends. When the time shift of the amplitude of the wave is less than the fluctuation threshold value (No in step S108), the diagnosis unit 14 diagnoses that the wave produced at the origin 31 is caused by the structural factor 152 (step S109), and the entire process ends.

The fluid leakage diagnosis device 10 according to the present example embodiment makes it possible to enhance the accuracy of fluid leakage diagnosis for a pipe accomplished through measurement of a wave produced in the pipe. The reason for this is that the fluid leakage diagnosis device 10 diagnoses fluid leakage in the pipe based on the result of detecting a structural factor of causing a wave based on the structural information of the pipe and the result of determining whether the time shift of the wave measurement information satisfies the condition.

The effects implemented by the fluid leakage diagnosis device 10 according to the present example embodiment will be described in detail below.

For example, in a general fluid leakage detection system using the correlation method described above, all waves that reach two sensors installed at two ends of the investigation target section in common are detected. That is, these sensors detect, for example, a wave caused by an external environment or a wave produced by a pipe structure in addition to a wave produced by fluid leakage. In particular, since the wave produced due to the pipe structure is produced exactly from the pipe as in the case of the fluid leakage, it is difficult to distinguish such a wave from the wave produced due to fluid leakage. For this reason, a false positive occurs in general detection of fluid leakage, and there is thus a disadvantage that the diagnostic accuracy for fluid leakage is lowered.

To cope with such a problem, the fluid leakage diagnosis device 10 according to the present example embodiment includes the identification unit 11, the detection unit 12, the determination unit 13, and the diagnosis unit 14, and operates as described above with reference to, for example, Figs. 1 to 6. That is, the identification unit 11 identifies the position of the origin 31 of the wave based on the wave measurement information 150 expressing the wave measured in the pipe 30. The detection unit 12 detects, based on the structural information 151 of the pipe 30, the structural factor 152 of causing the wave that lies in the position of the origin 31 identified by the identification unit 11. The determination unit 13 determines whether the time shift of the wave measurement information 150 satisfies the condition. Then, the diagnosis unit 14 diagnoses fluid leakage in the pipe 30 based on the detection result from the detection unit 12 and the determination result from the determination unit 13.

That is, the fluid leakage diagnosis device 10 according to the present example embodiment confirms the presence or absence of the structural factor 152 of causing the wave at the position of the origin 31, based on the structural information 151. The fluid leakage diagnosis device 10 then diagnoses that the wave is caused by the structural factor 152 when the time shift of the wave measurement information 150 satisfies the condition in a case where the structural factor 152 of causing the wave exists. Consequently, the fluid leakage diagnosis device 10 according to the present example embodiment avoids the occurrence of false positives in the diagnosis of fluid leakage, and thus the diagnostic accuracy can be enhanced.

The fluid leakage diagnosis device 10 according to the present example embodiment diagnoses that fluid leakage has occurred in the pipe 30 when the structural factor 152 of causing the wave exists and the fluctuation amount of the amplitude (physical characteristic value) of the wave indicated by the wave measurement information 150 is equal to or more than the fluctuation threshold value (first threshold value). Additionally, the fluid leakage diagnosis device 10 uses, as the fluctuation threshold value, a value greater than the maximum value of the fluctuation amount of the amplitude of the wave measured in a prescribed period (for example, one week in which one round of the life pattern of a person is completed) in the pipe 30 in a state in which no fluid leakage has occurred. The fluid leakage diagnosis device 10 makes such a diagnosis based on that it is deemed that, when the amplitude of the wave fluctuates within the fluctuation threshold value, the wave is caused by the structural factor 152, and when the amplitude of the wave begins to fluctuate beyond the fluctuation threshold value, there is a high possibility that fluid leakage has occurred in the vicinity of the origin 31. As described above, the fluid leakage diagnosis device 10 according to the present example embodiment can more reliably enhance the accuracy of fluid leakage diagnosis of the pipe 30.

The fluid leakage diagnosis device 10 according to the present example embodiment diagnoses that fluid leakage has occurred in the pipe 30 when the structural factor 152 of causing the wave does not exist and the physical characteristic value (the peak value of the cross-correlation function 110) of the wave indicated by the wave measurement information 150 is equal to or more than the second threshold value (diagnostic target threshold value). On the other hand, the fluid leakage diagnosis device 10 diagnoses that there is no problem with the pipe 30 when the peak value of the cross-correlation function 110 is less than the diagnostic target threshold value. The fluid leakage diagnosis device 10 makes such a diagnosis based on that it is deemed by experience that there is no particular problem even when a wave in which the peak value of the cross-correlation function 110 is less than the diagnostic target threshold value is produced. As described above, the fluid leakage diagnosis device 10 according to the present example embodiment avoids a detailed investigation relating to fluid leakage from being performed more than necessary, and thus can raise the efficiency of the detailed investigation relating to fluid leakage.

The diagnosis unit 14 may use a physical characteristic value of the wave other than the peak value of the cross-correlation function 110 when determining whether the origin 31 is regarded as a diagnostic target. The diagnosis unit 14 may use, for example, the amplitude or frequency spectrum of the wave measured by the sensor 21 or 22 (that is, relating to one place in the pipe 30) as the physical characteristic value. Alternatively, the diagnosis unit 14 may have a simple configuration in which it is not determined whether the physical characteristic value of the wave is equal to or more than the diagnostic target threshold value.

### <Second Example Embodiment>

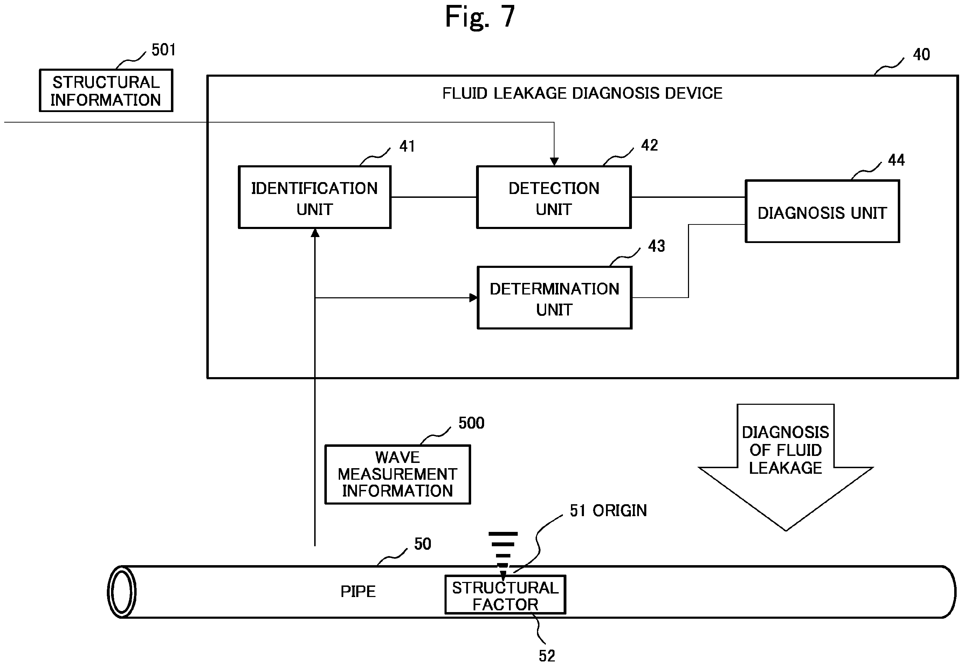

Fig. 7 is a block diagram illustrating a configuration of a fluid leakage diagnosis device 40 according to a second example embodiment of the present invention.

The fluid leakage diagnosis device 40 according to the present example embodiment includes an identification unit 41, a detection unit 42, a determination unit 43, and a diagnosis unit 44.

The identification unit 41 identifies the position of an origin 51 of a wave measured in a pipe 50 based on wave measurement information 500 expressing the wave.

The detection unit 42 detects, based on structural information 501 of the pipe 50, a structural factor 52 of causing the wave that lies in the position of the origin 51 identified by the identification unit 41.

The determination unit 43 determines whether a time shift of the wave measurement information 500 satisfies a condition.

The diagnosis unit 44 diagnoses fluid leakage in the pipe 50 based on the detection result from the detection unit 42 and the determination result from the determination unit 43.

The fluid leakage diagnosis device 40 according to the present example embodiment makes it possible to enhance the accuracy of fluid leakage diagnosis for a pipe accomplished through measurement of a wave produced in the pipe. The reason for this is that the fluid leakage diagnosis device 40 diagnoses fluid leakage in the pipe 50 based on the result of detecting the structural factor 52 of causing the wave based on the structural information 501 of the pipe and the result of determining whether the time shift of the wave measurement information 500 satisfies the condition.

### <Hardware Configuration Example>

Each member of the fluid leakage diagnosis devices illustrated in Figs. 1 and 7 in each example embodiments described above can be implemented by dedicated hardware (HW) (electronic circuit). In Figs. 1 and 7, at least the following constituents can be considered as functional (processing) units (software modules) of a software program.
- Identification units 11 and 41,
- Detection units 12 and 42,
- Determination units 13 and 43,
- Diagnosis units 14 and 44, and
- Storage control function in storage unit 15.

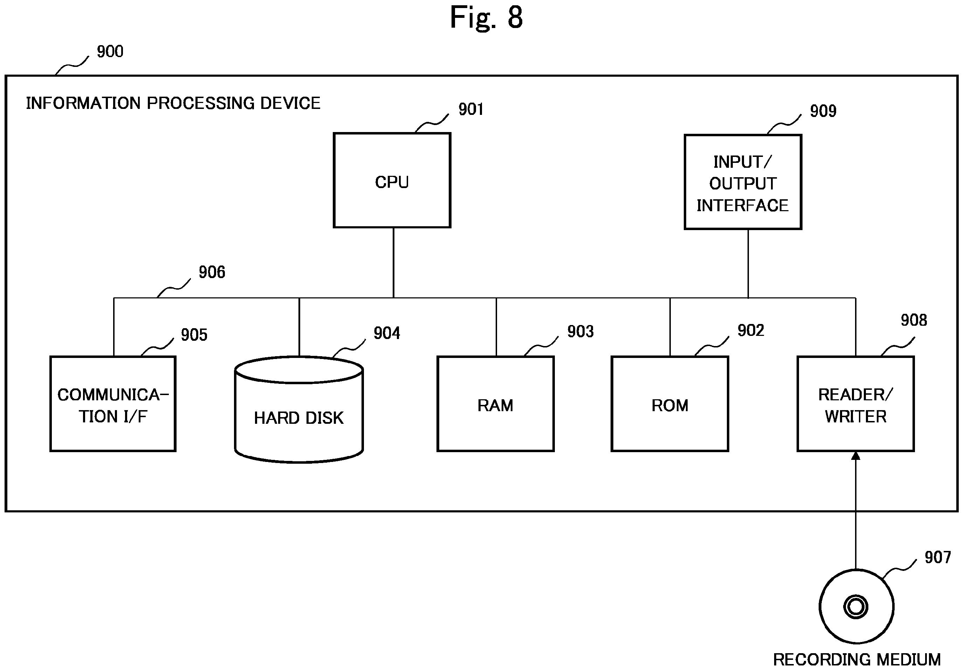

However, the division between each members illustrated in these drawings is for a configuration for convenience of explanation, and a variety of configurations can be presumed when actually equipped. An example of the hardware environment in this case will be described with reference to Fig. 8.

Fig. 8 is a diagram illustratively explaining a configuration of an information processing device 900 (computer) capable of executing the fluid leakage diagnosis device according to each example embodiment of the present invention. That is, Fig. 8 expresses a configuration of a computer (information processing device) capable of implementing the fluid leakage diagnosis devices illustrated in Figs. 1 and 7, which is a hardware environment capable of implementing each function in the above-described example embodiments.

The information processing device 900 illustrated in Fig. 8 includes the following members as constituent elements.
- Central processing unit (CPU) 901,
- Read only memory (ROM) 902,
- Random access memory (RAM) 903,
- Hard disk (storage device) 904,
- Communication interface 905 that obtains the measurement results and the like from the sensors 22 and 21,
- Bus 906 (communication line),
- Reader/writer 908 capable of reading and writing data stored in recording medium 907 such as compact disc read only memory (CD-ROM), and
- Input/output interface 909 such as monitor, speaker, and keyboard.

That is, the information processing device 900 including the above constituent elements is a general computer in which these constituents are connected via the bus 906. The information processing device 900 includes a plurality of CPUs 901 or a CPU 901 constituted by a multi-core in some cases.

Then, the present invention described using the above-described example embodiments as examples supplies a computer program capable of implementing the following functions to the information processing device 900 illustrated in Fig. 8. The functions are functions of the above-described constituents in the block configuration diagrams (Figs. 1 and 7) referred to in the description of the example embodiments or functions in the flowchart (Fig. 6). The present invention is achieved by thereafter reading, interpreting, and executing the supplied computer program in the CPU 901 of the hardware. The computer program supplied into the device can be stored in a readable and writable volatile memory (RAM 903) or a nonvolatile storage device such as the ROM 902 or the hard disk 904.

In the case described above, a general procedure in the present day can be adopted as a method of supplying the computer program into the hardware. Examples of the procedure include a method of installing the computer program into the device via various recording media 907 such as a CD-ROM, and a method of downloading the computer program from the outside via a communication line such as the Internet. Then, in such a case, the present invention can be considered to be constituted by a code constituting the computer program or the recording medium 907 in which the above code is stored.

The present invention has been described above with reference to the above-described example embodiments as typical examples. However, the present invention is not limited to the example embodiments described above. That is, it will be understood by those of ordinary skill in the art that various aspects may be applied therein without departing from the spirit and scope of the present invention as defined by the claims.

This application is based upon and claims the benefit of priority from Japanese patent application No. 2018-175419, filed on September 19, 2018, the disclosure of which is incorporated herein in its entirety by reference.

### [Reference signs List]

- 1: fluid leakage diagnosis system
- 10: fluid leakage diagnosis device
- 11: identification unit
- 110: cross-correlation function
- 12: detection unit
- 13: determination unit
- 14: diagnosis unit
- 15: storage unit
- 150: wave measurement information
- 151: structural information
- 152: structural factor
- 21 and 22: sensor
- 23 and 24: collection device
- 30: pipe
- 31: origin
- 40: fluid leakage diagnosis device
- 41: identification unit
- 42: detection unit
- 43: determination unit
- 44: diagnosis unit
- 50: pipe
- 51: origin
- 52: structural factor
- 900: information processing device
- 901: CPU
- 902: ROM
- 903: RAM
- 904: hard disk (storage device)
- 905: communication interface
- 906: bus
- 907: recording medium
- 908: reader/writer
- 909: input/output interface

## Claims

1. A fluid leakage diagnosis device comprising:
identification means for using wave measurement information expressing a wave measured in a pipe to identify a position of an origin of the wave;
detection means for using structural information of the pipe to detect a structural factor causing the wave at the position of the origin identified by the identification means;
determination means for determining whether a time shift of the wave measurement information satisfies a condition; and
diagnosis means for diagnosing fluid leakage in the pipe based on a detection result by the detection means and a determination result by the determination means.

2. The fluid leakage diagnosis device according to claim 1, wherein
the determination means determines whether or not a fluctuation amount of a physical characteristic value of the wave indicated by the wave measurement information is equal to or more than a first threshold value, and
the diagnosis means diagnoses that the fluid leakage has occurred in the pipe when the detection means detects the structural factor and the determination means determines that the fluctuation amount of the physical characteristic value of the wave is equal to or more than the first threshold value.

3. The fluid leakage diagnosis device according to claim 2, wherein
the first threshold value is a value greater than a maximum value of the fluctuation amount of the physical characteristic value of the wave measured in a prescribed period in the pipe in a state in which the fluid leakage has not occurred.

4. The fluid leakage diagnosis device according to any one of claims 1 to 3,
wherein
the diagnosis means diagnoses that the fluid leakage has occurred in the pipe when the detection means does not detect the structural factor and the determination means determines that the physical characteristic value of the wave indicated by the wave measurement information is equal to or more than a second threshold value.

5. The fluid leakage diagnosis device according to any one of claims 1 to 4,
wherein
the wave includes a vibration propagating through the pipe or a pressure wave propagating a fluid flowing in the pipe.

6. The fluid leakage diagnosis device according to any one of claims 1 to 5,
wherein
the physical characteristic value of the wave includes an amplitude of the wave or a frequency spectrum of the wave.

7. The fluid leakage diagnosis device according to any one of claims 1 to 6,
wherein
the identification means calculates a cross-correlation with respect to the wave measurement information obtained at a plurality of places in the pipe, and identifies the position of the origin of the wave based on the cross-correlation being calculated.

8. A fluid leakage diagnosis system comprising:
the fluid leakage diagnosis device according to any one of claims 1 to 7; and
a measuring device that generates the wave measurement information by measuring the wave.

9. A fluid leakage diagnosis method
that is implemented by an information processing device, the fluid leakage diagnosis method comprising:
using wave measurement information expressing a wave measured in a pipe to identify a position of an origin of the wave;
using structural information of the pipe to detect a structural factor causing the wave at the position of the origin that has been identified;
determining whether a time shift of the wave measurement information satisfies a condition; and
diagnosing fluid leakage in the pipe based on a detection result relating to the structural factor and a determination result relating to the time shift.

10. A recording medium storing a fluid leakage diagnosis program for causing a computer to execute:
an identification process of using wave measurement information expressing a wave measured in a pipe to identify a position of an origin of the wave;
a detection process of using structural information of the pipe to detect a structural factor causing the wave at the position of the origin identified by the identification process;
a determination process of determining whether a time shift of the wave measurement information satisfies a condition; and
a diagnosis process of diagnosing fluid leakage in the pipe based on a detection result by the detection process and a determination result by the determination process.
